# EUROPÄISCHE PATENTSCHRIFT

(11) **EP 3 571 750 B1**
(45) Veröffentlichungstag und Bekanntmachung des Hinweises auf die Patenterteilung: **25.11.2020**
(21) Anmeldenummer: 18707342.4
(22) Anmeldetag: 22.02.2018
(51) Int. Cl.: H02H 9/00, H02H 9/04

(54) **VORRICHTUNG ZUR SPANNUNGSBEGRENZUNG FÜR EIN GLEICHSPANNUNGSNETZ**
APPARATUS FOR LIMITING VOLTAGE FOR A DC VOLTAGE NETWORK
DISPOSITIF DE LIMITATION DE LA TENSION POUR UN RÉSEAU DE TENSION CONTINUE

(30) Priorität: 24.02.2017 DE 102017203053
(43) Veröffentlichungstag der Anmeldung: 27.11.2019
(73) Patentinhaber: Siemens Aktiengesellschaft, 80333 München (DE)
(72) Erfinder: RUPP, Jürgen, 91056 Erlangen (DE)
(86) Internationale Anmeldenummer: PCT/EP2018/054399
(87) Internationale Veröffentlichungsnummer: WO 2018/153993

(56) Entgegenhaltungen:
- DE-A1-102010 006 525
- DE-A1-102011 053 013
- GB-A- 1 242 673
- GB-A- 2 436 936

## Beschreibung

Die Erfindung betrifft eine Vorrichtung zur Spannungsbegrenzung für ein Gleichspannungsnetz, in dem zwischen einer ersten Versorgungspotentialebene und einer zweiten Versorgungspotentialebene des Gleichspannungsnetzes aus Schaltvorgängen resultierende Überspannungen auftreten.

Aus Schaltvorgängen resultierende Überspannungen in einem Gleichspannungsnetz treten beispielsweise bei der Rückspeisung von Energie aus elektrischen Maschinen oder bei Schalthandlungen in induktiven Gleichspannungsnetzen auf. Die Überspannungen müssen begrenzt werden, um Schäden an den an das Gleichspannungsversorgungsnetz angeschlossenen Komponenten zu vermeiden.

Als Überspannungsbegrenzer sind neben Varistoren und RC-Beschaltungen auch elektronische Spannungsbegrenzer, sogenannte Bremschopper, bekannt. Varistoren können zwar sehr gut hohe Ableitströme aufnehmen, sind jedoch nicht für häufig auftretende Überspannungen, wie sie bei Schaltvorgängen entstehen, geeignet. Bei häufiger Energieaufnahme altern Varistoren sehr schnell. Der bei RC-Beschaltungen genutzte Kondensator ist in Abhängigkeit der zu erwartenden Überspannungen zu dimensionieren. Bei großen, aufzunehmenden Energiemengen ist der Kondensator teuer. Darüber hinaus weist er eine signifikante Größe und ein signifikantes Gewicht auf. Bremschopper werden an Zwischenkreisen von Umrichtern eingesetzt. Die Bremschopper werden dazu genutzt, Bremsenergie der an das Gleichspannungsversorgungsnetz angeschlossenen elektrischen Maschine abzubauen.

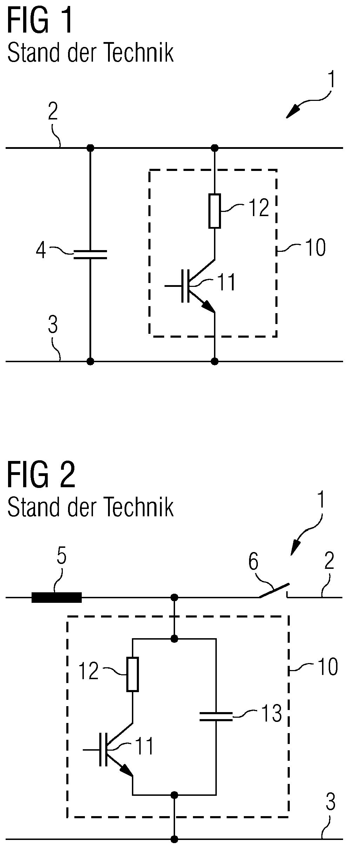

Ein solcher, aus dem Stand der Technik bekannter Bremschopper, ist in Figur 1 exemplarisch dargestellt. Fig. 1 zeigt ein Gleichspannungsnetz 1 mit einer ersten Versorgungspotentialebene 2 und einer zweiten Versorgungspotentialebene 3. Zwischen der ersten und der zweiten Versorgungspotentialebene 2, 3 ist ein Zwischenkreiskondensator 4 verschaltet. Nicht dargestellt sind ein eingangsseitig vorhandener Gleichrichter sowie ein ausgangsseitig vorhandener Wechselrichter. Der Bremschopper, der die Funktion eines Überspannungsbegrenzers 10 hat, besteht aus einer Serienschaltung aus einem steuerbaren Schaltelement 11 und einem Bremswiderstand 12. Der Bremschopper bzw. Überspannungsbegrenzer 10 ist dabei dem Zwischenkreiskondensator 4 zwischen der ersten und der zweiten Versorgungspotentialebene 2, 3 parallel geschaltet. Das steuerbare Schaltelement 11 arbeitet als Schalter. Der Widerstand 12 wird mit Hilfe des steuerbaren Schaltelements 11 gepulst in den Zwischenkreis geschaltet, sodass die Spannung am Zwischenkreiskondensator 4 in Folge der durch einen Bremsvorgang des elektrischen Antriebs ansteigenden Spannung allmählich wieder abgesenkt wird. Die von der elektrischen Maschine während des Bremsvorgangs zurückgespeiste Energie wird damit in Wärme umgesetzt, solange, bis die über dem Zwischenkreiskondensator 4 abfallende Zwischenkreisspannung unter eine voreingestellte Abschaltschwelle sinkt. Eine entsprechende Steuereinheit zur Ansteuerung des steuerbaren Schaltelements 11 ist der Einfachheit halber nicht dargestellt.

Wenn Energie an einer Stelle in dem Gleichspannungsnetz abgebaut werden muss, an der keine Kapazität zur Glättung vorhanden ist, wie dies bei dem in Fig. 1 gezeigten Zwischenkreis der Fall ist, kann der Bremschopper auch mit einer eigenen kleinen Kapazität versehen sein. Ein solcher Fall liegt beispielsweise am Ende eines langen Kabels oder am Ausgang einer Drossel vor einem Schaltelement vor. Letzteres ist exemplarisch in Fig. 2 dargestellt. Fig. 2 zeigt einen Teil eines Gleichspannungsnetzes 1, bei dem in einer Leitung der ersten Versorgungspotentialebene 2 eine Drossel 5 und ein Schaltelement 6 seriell miteinander verschalten sind. Der Bremschopper, der den Überspannungsbegrenzer 10 ausbildet, ist an einem Knotenpunkt zwischen der Drossel 5 und dem Schaltelement 6 mit der ersten Versorgungspotentialebene 2 verbunden. Sein anderes Ende ist in bekannter Weise mit der zweiten Versorgungspotentialebene 3 verbunden. Der Bremschopper bzw. der Überspannungsbegrenzer 10 umfasst neben der Serienschaltung aus dem steuerbaren Schaltelement 11 und dem Widerstand 12 einen dazu parallel geschalteten Kondensator 13, der in den Phasen, in denen das steuerbare Schaltelement 11 sperrend geschaltet ist, den von der Drossel 5 erzeugten Strom aufnehmen kann. Der Kondensator 13 ist dabei lediglich für die Energieaufnahme während des Ausschaltvorgangs des steuerbaren Schaltelements 11 ausgelegt.

Ein Problem der in Figuren 1 und 2 beschriebenen Bremschopper besteht darin, dass für höhere Spannungen, insbesondere von mehr als 1000 V, die steuerbaren Schaltelemente entweder sehr teuer oder gar nicht verfügbar sind.

Die DE 10 2011 053 013 A1 offenbart eine Symmetriervorrichtung für zwei oder mehrere in Reihe geschaltete Energiespeicher. Die Symmetriervorrichtung weist eine der Anzahl der Energiespeicher entsprechende Anzahl von Bypass-Schaltungen zur Begrenzung der Spannung eines zugehörigen Energiespeichers auf, wobei die Bypass-Schaltung zu dem zugehörigen Energiespeicher parallel angeschlossen ist und eine Reihenschaltung aus wenigstens einem ohmschen Widerstand und einem ansteuerbaren Schalterelement aufweist. Eine Steuereinrichtung steuert das Schalterelement der Bypass-Schaltung, wenn die Spannungshöhe an dem zugehörigen Energiespeicher einen zulässigen Grenzwert überschreitet, an, um den Stromfluss auf die Bypass-Schaltung umzuleiten und den Energiespeicher auf zulässige Spannungswerte zu entladen.

Es ist Aufgabe der Erfindung, eine Vorrichtung zur Spannungsbegrenzung für ein Gleichspannungsnetz anzugeben, das funktionell und/oder baulich verbessert ist.

Diese Aufgabe wird gelöst durch eine Vorrichtung gemäß den Merkmalen des Patentanspruchs 1. Vorteilhafte Ausgestaltungen ergeben sich aus den abhängigen Patentansprüchen.

Die Erfindung schafft eine Vorrichtung zur Spannungsbegrenzung für ein Gleichspannungsnetz, in dem zwischen einer ersten Versorgungspotentialebene und einer zweiten Versorgungspotentialebene des Gleichspannungsnetzes aus Schaltvorgängen resultierende Überspannungen auftreten. Die Vorrichtung umfasst zumindest zwei zwischen der ersten Versorgungspotentialebene und der zweiten Versorgungspotentialebene in Serie verschaltete Begrenzerzellen. Jede der Begrenzerzellen umfasst eine Anordnung aus einem steuerbaren Schaltelement, einem Entladewiderstand und einem Kondensator. Über den zumindest zwei in Serie verschalteten Begrenzerzellen fällt die zwischen der ersten Versorgungspotentialebene und der zweiten Versorgungspotentialebene anliegende (Gesamt-)Spannung ab. Im Betrieb der Vorrichtung wird in Abhängigkeit der über dem Kondensator einer jeweiligen Begrenzerzelle abfallenden Spannung deren steuerbares Schaltelement leitend oder sperrend geschaltet. Die Vorrichtung umfasst eine Steuereinheit zum Ansteuern der jeweiligen Schaltelemente der Begrenzerzellen. Die Steuereinheit ist dazu ausgestaltet, bei einer zwischen den Leitungen der ersten und zweiten Versorgungsspannungsebene auftretenden Überspannung, mit zeitlichem Versatz die steuerbaren Schaltelemente gepulst zu betreiben. Die Spannungen der Kondensatoren werden ermittelt und verglichen und, zu einem gegebenen Zeitpunkt, wird das steuerbare Schaltelement einer der Begrenzerzellen leitend geschaltet, über deren Kondensator die gerade höchste Spannung anliegt, während die steuerbaren Schaltelemente der anderen Begrenzerzellen sperrend geschaltet wird oder werden.

Die erfindungsgemäß vorgeschlagene Vorrichtung zur Spannungsbegrenzung, nachfolgend auch als Spannungsbegrenzer oder Überspannungsbegrenzer bezeichnet, ist modular aus mehreren Begrenzerzellen ausgebildet, welche in einer Serienschaltung zwischen der ersten und der zweiten Versorgungspotentialebene verschaltet sind. Durch die Reihenschaltung einer Mehrzahl von Begrenzerzellen fällt über den sperrend geschalteten steuerbaren Schaltelementen lediglich eine Teilspannung ab, sodass steuerbare Schaltelemente kleiner Spannung im Vergleich zu einer einzigen Begrenzerzelle eingesetzt werden können. Dadurch können die steuerbaren Schaltelemente kostengünstiger gewählt werden.

Ein weiterer Vorteil besteht darin, dass sich durch das Vorhandensein des Kondensators in jeder Begrenzerzelle die Spannung am jeweiligen steuerbaren Schaltelement der Begrenzerzelle nicht sprunghaft ändern kann. Dadurch ist eine Symmetrierung, d.h. eine genaue zeitliche Ansteuerung der einzelnen steuerbaren Schaltelemente der Begrenzerzellen, zeitlich unkritisch.

Die über den jeweiligen Begrenzerzellen abfallende Maximalspannung kann unabhängig voneinander geregelt werden.

Es ist vorgesehen, dass im Betrieb der Vorrichtung zur Spannungsbegrenzung zu einem gegebenen Zeitpunkt das steuerbare Schaltelement derjenigen Begrenzerzelle leitend geschaltet wird, über deren Kondensator die höchste Spannung im Vergleich zu den Spannungen der Kondensatoren der übrigen Begrenzerzellen anliegt. Mit anderen Worten werden die Spannungen über den Kondensatoren aller Begrenzerzellen separat ermittelt und miteinander verglichen. Das Schaltelement derjenigen Begrenzerzelle, über dessen Kondensator die höchste Spannung abfällt, wird dann leitend geschaltet. Hierdurch ist sichergestellt, dass keine Überlastung des steuerbaren Schaltelements einer jeweiligen Begrenzerzelle, auch bei hohen Überspannungen, auftreten kann.

Es ist weiter vorgesehen, dass die steuerbaren Schaltelemente im Betrieb der Vorrichtung gepulst betrieben werden. Dies bedeutet, die jeweiligen Begrenzerelemente werden, wie dies bei einem herkömmlichen Bremschopper der Fall ist, gepulst ("zerhackt") betrieben, um die Spannung zwischen der ersten und der zweiten Versorgungspotentialebene allmählich abzusenken. Es ist insbesondere möglich, von herkömmlichen Bremschoppern bekannte Steuereinheiten für die erfindungsgemäß vorgeschlagene Vorrichtung zur Spannungsabsenkung zu verwenden.

Eine weitere zweckmäßige Ausgestaltung sieht vor, dass im Betrieb der Vorrichtung zur Spannungsbegrenzung zu einem gegebenen Zeitpunkt eine erste Teilanzahl der steuerbaren Schaltelemente der zumindest zwei Begrenzerzellen leitend und eine zweite Teilanzahl der steuerbaren Schaltelemente der zumindest zwei Begrenzerzellen sperrend geschaltet ist. Bei einer solchen Auslegung ist sichergestellt, dass auch bei einem auftretenden Kurzschluss, bei dem ein maximaler Ableitstrom zu handhaben ist, durch das gleichzeitige Aktivieren aller Begrenzerzellen (d.h. das gleichzeitige leitend schalten der jeweiligen steuerbaren Schaltelemente aller Begrenzerzellen) möglich ist. Dadurch kann insbesondere sichergestellt werden, dass auch bei einem Kurzschluss und dem in Folge dessen hohen Ableitstrom keine Schädigung der Bauelemente der Begrenzerzellen auftreten kann.

Eine weitere zweckmäßige Ausgestaltung sieht vor, dass die Anordnung eine Serienschaltung aus dem steuerbaren Schaltelement und dem Entladewiderstand umfasst und der Serienschaltung der Kondensator parallel geschaltet ist. Bei einer solchen Konfiguration kann das steuerbare Schaltelement ein IGBT (Insulated Gate Bipolar Transistor) sein.

In einer anderen Ausgestaltung kann die Serienschaltung zusätzlich zu dem steuerbaren Schaltelement und dem Entladewiderstand eine Induktivität umfassen. Die Höhe der Induktivität wird zweckmäßigerweise in Abhängigkeit der Größe des Kondensators und/oder des Entladewiderstands derart gewählt, dass durch jede Begrenzerzelle ein RLC-Schwingkreis ausgebildet ist. Dies ermöglicht es, als steuerbares Schaltelement einen Thyristor zu wählen, da mit Hilfe des RLC-Schwingkreises ein automatisches Löschen, d.h. sperrend schalten, des Thyristors möglich ist. Eine vereinfachte Ansteuerung ergibt sich dann, wenn das steuerbare Schaltelement als GTO (Gate Turn-Off Thyristor) ausgebildet ist oder der Thyristor mit einem Löschkreis versehen wird.

Eine weitere zweckmäßige Ausgestaltung sieht vor, dass die Anzahl der Begrenzerzellen größer als zwei ist. Die genaue Anzahl der Begrenzerzellen hängt von der Nennspannung zwischen der ersten und der zweiten Versorgungspotentialebene sowie der Spannungsfestigkeitsklasse des in den jeweiligen Begrenzerzellen zum Einsatz kommenden steuerbaren Schaltelements ab. Grundsätzlich ist die Funktionsfähigkeit bereits dann gewährleistet, wenn zwei Begrenzerzellen seriell hintereinander zwischen der ersten und der zweiten Versorgungspotentialebene verschaltet sind.

Die Vorrichtung zur Spannungsbegrenzung umfasst eine Steuereinheit zum Ansteuern der jeweiligen Schaltelemente der Begrenzerzellen. Wie einleitend bereits erläutert, kann die Steuereinheit derart ausgestaltet sein, dass diese eine übergeordnete Koordination des zeitlichen Ein- und Ausschaltverhaltens der steuerbaren Schaltelemente der verschiedenen Begrenzerzellen vornimmt. Die Steuereinheit kann jedoch auch derart ausgebildet sein, dass diese die Ansteuerung der steuerbaren

Schaltelemente in Abhängigkeit der jeweils über den Kondensatoren der Begrenzerzellen anliegenden Spannung ausschließlich vornimmt.

Es ist weiterhin zweckmäßig, wenn die Nennspannung zwischen der ersten Versorgungspotentialebene und der zweiten Versorgungspotentialebene des Gleichspannungsnetzes größer als 1000 V ist. Mit anderen Worten bedeutet dies, dass die Vorrichtung zur Spannungsbegrenzung insbesondere in Mittelspannungsnetzen, wie diese beispielsweise für Schiffe oder in industriellen Anlagen zum Einsatz kommen, vorgesehen ist.

Die Erfindung wird nachfolgend näher anhand von Ausführungsbeispielen in der Zeichnung erläutert. Es zeigen:
- Fig. 1: eine schematische Darstellung eines bekannten Zwischenkreises eines Gleichspannungsnetzes mit einer als Bremschopper ausgebildeten Vorrichtung zur Spannungsbegrenzung;
- Fig. 2: eine schematische Darstellung eines bekannten Bremschoppers am Ausgang einer Drossel vor einem Schaltelement;
- Fig. 3: eine schematische Darstellung einer ersten Ausgestaltungsvariante einer erfindungsgemäßen Vorrichtung zur Spannungsbegrenzung für ein Gleichspannungsnetz;
- Fig. 4: eine schematische Darstellung einer zweiten Ausgestaltungsvariante einer erfindungsgemäßen Vorrichtung zur Spannungsbegrenzung.

In den Figuren sind gleiche Elemente mit gleichen Bezugszeichen versehen.

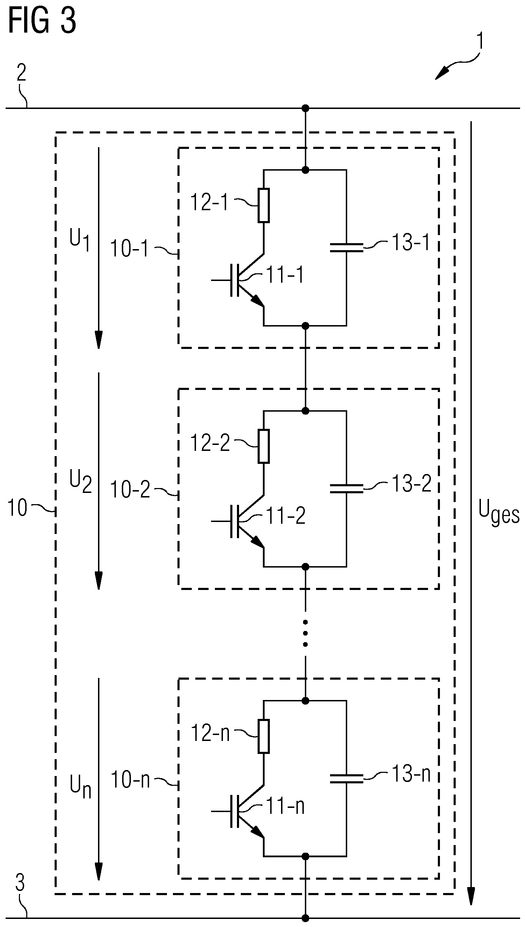

Fig. 3 zeigt eine schematische Darstellung eines Teils eines Gleichspannungsnetzes 1, von dem eine Leitung einer ersten Versorgungspotentialebene 2 und eine Leitung einer zweiten Versorgungspotentialebene 3 dargestellt ist. Zwischen den Leitungen der ersten und der zweiten Versorgungspotentialebene 2, 3 ist eine erfindungsgemäße Vorrichtung 10 zur Spannungsbegrenzung (nachfolgend als Spannungsbegrenzer oder Überspannungsbegrenzer bezeichnet) verschaltet. Der Überspannungsbegrenzer 10 umfasst eine Anzahl von n seriell zwischen der ersten und der zweiten Versorgungspotentialebene 2, 3 verschalteten Begrenzerzellen 10-1, ..., 10-n. Die Anzahl n ist im vorliegenden Fall zwei oder größer. Die Anzahl der Begrenzerzellen 10-1,..., 10-n ist jeweils identisch aufgebaut und umfasst jeweils eine Anordnung aus einem steuerbaren Schaltelement 11-i, einem Entladewider stand 12-i und einem Kondensator 13-i, wobei i = 1 bis n ist. In jeder der Begrenzerzellen 10-i sind das steuerbare Schaltelement 11-i und der Entladewiderstand 12-i seriell miteinander verschaltet. Parallel zu dieser Serienschaltung aus dem steuerbaren Schaltelement 11-i und dem Entladewiderstand 12-i ist der Kondensator 13-i verschaltet.

Der Knotenpunkt zwischen dem Entladewiderstand 12-1 und dem Kondensator 13-1 der ersten Begrenzerzelle 10-1 ist mit der Leitung der ersten Versorgungspotentialebene 2 verbunden. Der Knotenpunkt zwischen einem Lastanschluss des steuerbaren Schaltelements 11-1 und dem Kondensator 13-1 der ersten Begrenzerzelle 10-1 ist mit dem Knotenpunkt aus Entladewiderstand 12-2 und Kondensator 13-2 der darauffolgenden zweiten Begrenzerzelle 10-2 verschaltet. Die letzte Begrenzerzelle 10-n ist mit dem Knotenpunkt zwischen dem Hauptanschluss des steuerbaren Schaltelements 11-n und dem Kondensator 13-n mit der Leitung der zweiten Versorgungspotentialebene 3 verschaltet. Als steuerbare Schaltelemente 11-i sind in den Begrenzerzellen 10-i IGBTs vorgesehen. Die Steueranschlüsse der IGBTs sind mit einer nicht dargestellten Steuereinheit verbunden.

Eine zwischen den Leitungen der ersten und der zweiten Versorgungspotentialebene 2, 3 abfallende Gesamtspannung U_{ges} teilt sich entsprechend der Anzahl n der Begrenzerzellen in Teilspannungen U₁, ...,Uₙ auf, wobei eine jeweilige Teilspannung Uᵢ über den jeweiligen Begrenzerzellen 10-i abfällt. Bei einer zwischen den Leitungen der ersten und der zweiten Versorgungspotentialebene 2,3 auftretenden Überspannung wird diese mit Hilfe der Vorrichtung 10 zur Spannungsbegrenzung allmählich abgebaut. Dazu werden die steuerbaren Schaltelemente 11-i der Begrenzerzellen 10-i mit zeitlichem Versatz gepulst betrieben. Entsprechend der Funktionsweise eines Bremschoppers wird, bei einem jeweils leitend geschalteten steuerbaren Schaltelement 11-i Strom durch den jeweils zugeordneten Entladewiderstand 12-i geführt und in Wärme umgewandelt. Wird das betreffende steuerbare Schaltelement 11-i sperrend geschaltet, so folgt über den zugeordneten Kondensator 13-i der jeweiligen Begrenzerzelle 10-i eine Spannungspufferung, da der Strom nun in den Kondensator 13-i fließen kann.

Die Reihenschaltung der Begrenzerzellen und die Topologie der Anordnungen der Begrenzerzellen stellt sicher, dass sich in jeder Begrenzerzelle die Spannung am einzelnen IGBT nicht sprunghaft ändern kann und daher eine Symmetrierung, d.h.eine zeitliche Synchronisation des Ein- und Ausschaltverhaltens der steuerbaren Schaltelmente 13-i aller Begrenzerzellen 10-i, nicht erforderlich ist. Ermöglicht wird dies durch den jeweils vorgesehenen Kondensator der Begrenzerzellen 10-i.

Die einzelnen Begrenzerzellen können ihre Maximalspannung unabhängig voneinander regeln, wobei keine übergeordnete Koordination durch die Steuereinheit zur Ansteuerung der steuerbaren Schaltelemente 11-i erforderlich ist. Die übergeordnete Koordination ist jedoch möglich, beispielsweise wenn eine variable Gesamtspannung U_{ges} eingestellt werden soll.

Ein Vorteil des in Fig. 3 beschriebenen Aufbaus besteht darin, dass als steuerbare Schaltelemente IGBTs kleiner Spannungsklassen, d.h. bis 1200 V, eingesetzt werden können, wenn von einer Nenn-Gesamtspannung U_{ges} ausgegangen wird, die größer als 1000 V ist.

Die Reihenschaltung der Kapazitäten der Kondensatoren 13-i in den Begrezerzellen 10-i liegt ggf. parallel zu einem zwischen den Leitungen der ersten und zweiten Versorgungspotentialebene 2, 3 verschalteten Zwischenkreiskondensator. Dadurch können die Kapazitäten der Kondensatoren 13-i die Funktion des Zwischenkreiskondensators zumindest teilweise ersetzen, sodass der Zwischenkreiskondensator kleiner dimensioniert werden kann. Der Zwischenkreiskondensator und die Vorrichtung 10 zur Spannungsbegrenzung können in einer solchen Konfiguration, wie diese schematisch in Fig. 1 illustriert ist, dann als Einheit betrachtet werden.

Bei der Verwendung von IGBTs als steuerbare Schaltelemente 11-i ist zu berücksichtigen, dass diese in einem Fehlerfall, z.B. einem Kurzschluss, höchstens bis zum zwei bis dreifachen Nennstrom überlastbar sind. Die Auslegung bzw. die Wahl der Anzahl n der Begrenzerzellen 10-i erfolgt somit bevorzugt derart, dass zum Ableiten der bei Schaltvorgängen in dem Gleichspannungsnetz auftretenden Überspannungen zu einem gegebenen Zeitpunkt nicht alle steuerbare Schaltelemente 11-i aller Begrenzerzellen 10-i leitend geschaltet werden brauchen. Umfasst die Vorrichtung 10 zur Spannungsbegrenzung beispielsweise n = 2 Begrenzerzellen, so ist zu einem gegebenen Zeitpunkt das steuerbare Schaltelement einer der Zellen leitend und das steuerbare Schaltelement der anderen Begrenzerzelle sperrend geschaltet. Bei einer größeren Anzahl n von Begrenzerzellen kann eine andere Aufteilung gewählt werden. Das Ein- und Ausschalten der IGBTs erfolgt derart, dass derjenige IGBT einer Begrenzerelle 10-i leitend geschaltet wird, über dessen zugeordnetem Kondensator 13-i im Vergleich zu den Spannungen aller anderen Kondensatoren der übrigen Begrenzerelemente 10-i die gerade höchste Spannung anliegt. Hierdurch ergibt sich automatisch und zufällig ein pulsierendes Ein- und Ausschalten jeweiliger steuerbarer Schaltelemente 11-i. Beim Auftreten eines Kurzschlusses, bei dem ein maximaler Ableitstrom auftreten kann, werden dann alle steuerbaren Schaltelemente bzw. IGBTs 11-i gleichzeitig leitend geschaltet. Dadurch kann die Spannungsüberhöhung schnellstmöglich abgebaut werden, ohne einen Schaden an den Schaltelementen hervorzurufen.

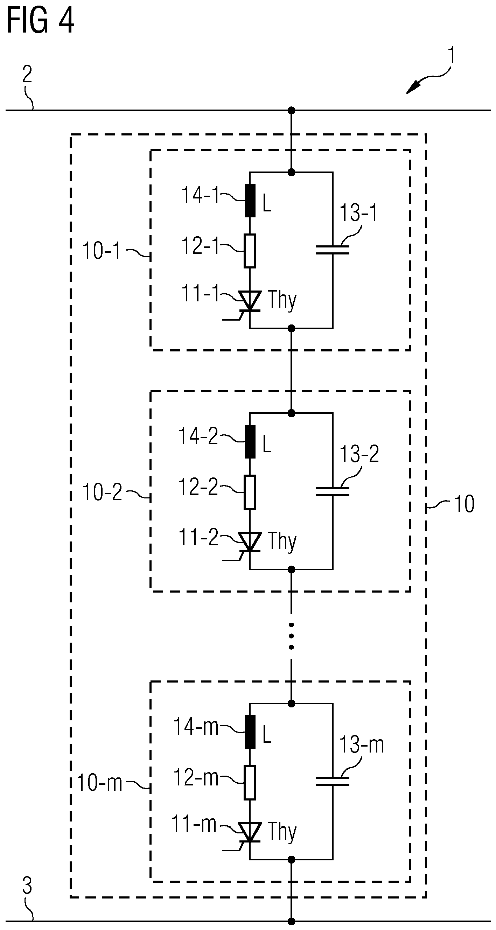

Zur Handhabung größerer Spannungen und größerer Leistungen können als steuerbare Schaltelemente auch Thyristoren eingesetzt werden. Ein solches Ausführungsbeispiel einer erfindungsgemäßen Vorrichtung 10 zur Spannungsbegrenzung ist schematisch in Fig. 4 dargestellt. Thyristoren weisen gegenüber IGBTs den Vorteil auf, dass diese den 10 bis 20-fachen Nennstrom zerstörungsfrei aushalten. Da Thyristoren jedoch nicht (ohne weiteres) abschaltbar sind, ist eine feinstufige Regelung der Spannung ohne weitere Maßnahmen nicht möglich. Durch das ausreichende serielle Verschalten von m Begrenzerzellen (wobei m vorzugsweise größer als n in dem Ausführungsbeispiel gemäß Fig. 3 ist) ist der Spannungshub jedoch selbst dann gering, wenn eine einzelne Begrenzerzelle beim Zünden des Thyristors vollständig entladen wird.

Beim Vorsehen von Thyristoren als steuerbare Schaltelemente 11-i, (wobei i = 1 bis m) wird zusätzlich zu der seriellen Verschaltung des steuerbaren Schaltelements 11-i und des Entladewiderstands 12-i eine Induktivität 14-i vorgesehen. Die Größe der Induktivität 14-i einer jeweiligen Begrenzerzelle 10-i wird in Abhängigkeit der Größe der Kapazität des Kondensators 13-i und des Widerstands des Entladewiderstands 12-i gewählt. Hierdurch wird dann ein RLC-Schwingkreis in jeder Begrenzerzelle 10-i ausgebildet. Dadurch wird innerhalb einer Begrenzerzelle 10-i ein Nullstrom zum Löschen des jeweiligen Thyristors 11-i nach vollständiger Entladung des Kondensators 13-i erzeugt. Dadurch ist ein Selbstlöschen des Thyristors möglich.

Die Anzahl m der Begrenzerzellen 10-i beträgt bei der Verwendung von Thyristoren zumindest m = 3. Bei lediglich zwei Begrenzerzellen, d.h. m = 2, würde jeder Kondensator 13-i die Gesamtspannung U_{ges}, die zwischen der ersten und der zweiten Versorgungspotentialebene 2, 3 auftritt, aufnehmen müssen, unter der Annahme, dass nicht alle Thyristoren aller Begrenzerelemente gleichzeitig leitend geschaltet sind.

In der praktischen Realisierung könnte als Anzahl m = 20 gewählt werden, wobei zu einem gegebenen Zeitpunkt z.B. drei Thyristoren von drei unterschiedlichen Begrenzerzellen leitend geschaltet würden. Diese Überdimensionierung ist zweckmäßig, da eine symmetrische Spannungsaufteilung über die jeweiligen Begrenzerelemente 10-i in dieser Konfiguration nicht möglich ist.

## Patentansprüche

1. Vorrichtung zur Spannungsbegrenzung für ein Gleichspannungsnetz (1), wobei die Vorrichtung (10) zumindest zwei zwischen einer ersten Versorgungspotentialebene (2) und einer zweiten Versorgungspotentialebene (3) in Serie verschaltete Begrenzerzellen (10-1, ..., 10-n) umfasst, von denen jede eine Anordnung aus einem steuerbaren Schaltelement (11-1, ..., 11-n), einem Entladewiderstand (12-1, ..., 12-n) und einem Kondensator (13-1, ..., 13-n) umfasst, wobei über den in Serie verschalteten Begrenzerzellen (10-1, ..., 10-n) die zwischen der ersten Versorgungspotentialebene (2) und der zweiten Versorgungspotentialebene (3) anliegende Spannung (U_{ges}) abfällt, wobei im Betrieb der Vorrichtung in Abhängigkeit der über dem Kondensator (13-1, ..., 13-n) einer jeweiligen Begrenzerzelle (10-1, ..., 10-n) abfallenden Spannung (U₁, U₂, U₃) deren steuerbares Schaltelement (11-1, ..., 11-n) leitend oder sperrend geschaltet wird,
**dadurch gekennzeichnet, dass** die Vorrichtung eine Steuereinheit zum Ansteuern der jeweiligen Schaltelemente (11-1, ..., 11-n) der Begrenzerzellen (10-1, ..., 10-n) umfasst, die so ausgestaltet ist, bei einer zwischen den Leitungen der ersten und zweiten Versorgungsspannungsebene (2, 3) auftretenden Überspannung, mit zeitlichem Versatz die steuerbaren Schaltelemente (11-1, ..., 11-n) gepulst zu betreiben, wobei die Spannungen der Kondensatoren (13-1, ..., 13-n) ermittelt und verglichen werden und, zu einem gegebenen Zeitpunkt, das steuerbare Schaltelement einer der Begrenzerzellen (10-1, ..., 10-n) leitend geschaltet wird, über deren Kondensator die gerade höchste Spannung anliegt, und die steuerbaren Schaltelemente (11-1, ..., 11-n) der anderen Begrenzerzellen (10-1, ..., 10-n) sperrend geschaltet wird oder werden.

2. Vorrichtung nach Anspruch 1,
**dadurch gekennzeichnet, dass** im Betrieb der Vorrichtung (10) zur Spannungsbegrenzung zu einem gegebenen Zeitpunkt die steuerbaren Schaltelemente (11-1, ..., 11-n) einer ersten Teilanzahl der zumindest zwei Begrenzerzellen (10-1, ..., 10-n) leitend und die steuerbaren Schaltelemente (11-1, ..., 11-n) einer zweiten Teilanzahl der zumindest zwei Begrenzerzellen (10-1, ..., 10-n) sperrend geschaltet ist.

3. Vorrichtung nach einem der vorhergehenden Ansprüche, **dadurch gekennzeichnet, dass** die Anordnung eine Serienschaltung aus dem steuerbaren Schaltelement (11-1, ..., 11-n) und dem Entladewiderstand (12-1, ..., 12-n) umfasst und der Serienschaltung der Kondensator (13-1, ..., 13-n) parallel geschaltet ist.

4. Vorrichtung nach Anspruch 3,
**dadurch gekennzeichnet, dass** das steuerbare Schaltelement (11-1, ..., 11-n) ein IGBT ist.

5. Vorrichtung nach Anspruch 3 ,
**dadurch gekennzeichnet, dass** die Serienschaltung zusätzlich eine Induktivität (14-1, ..., 14-n) umfasst.

6. Vorrichtung nach Anspruch 5,
**dadurch gekennzeichnet, dass** das steuerbare Schaltelement (11-1, ..., 11-n) ein Thyristor ist.

7. Vorrichtung nach Anspruch 5 oder 6,
**dadurch gekennzeichnet, dass** das steuerbare Schaltelement (11-1, ..., 11-n) ein GTO ist oder der Thyristor mit einem Löschkreis versehen wird.

8. Vorrichtung nach einem der Ansprüche 5 bis 7,
**dadurch gekennzeichnet, dass** die Höhe der Induktivität (14-1, ..., 14-n) in Abhängigkeit der Größe des Kondensators (13-1, ..., 13-n) und/oder des Entladewiderstands (12-1, ..., 12-n) derart gewählt wird, dass ein RLC-Schwingkreis ausgebildet ist.

9. Vorrichtung nach einem der Ansprüche 5 bis 8,
**dadurch gekennzeichnet, dass** die Anzahl der Begrenzerzellen (10-1, ..., 10-n) größer als 2 ist.

10. Vorrichtung nach einem der Ansprüche 1-4,
**dadurch gekennzeichnet, dass** als steuerbare Schaltelemente IGBTs mit einer Spannungsklasse bis zu 1200 V eingesetzt werden.

## Claims

1. Apparatus for limiting voltage for a DC voltage network (1), the apparatus (10) comprising at least two limiter cells (10-1, ..., 10-n) which are connected in series between a first supply potential level (2) and a second supply potential level (3) and each of which comprises an arrangement of a controllable switching element (11-1, ..., 11-n), a discharge resistor (12-1, ..., 12-n) and a capacitor (13-1, ..., 13-n), wherein across the limiter cells (10-1, ..., 10-n) connected in series the voltage (U_{ges}) applied between the first supply potential level (2) and the second supply potential level (3) drops, wherein during operation of the apparatus, on the basis of the voltage (U₁, U₂, U₃) dropping across the capacitor (13-1, ..., 13-n) of a particular limiter cell (10-1, ..., 10-n), the controllable switching element (11-1, ..., 11-n) of said limiter cell is switched on or off,
**characterized in that** said apparatus comprises a control unit for activating the respective switching elements (11-1, ..., 11-n) of the limiter cells (10-1, ..., 10-n), which is designed, in the event of an overvoltage occurring between the conductors of the first and second supply voltage level (2, 3), so as to operate the controllable switching elements (11-1, ..., 11-n) in pulsed mode with a time offset, the voltages of the capacitors (13-1, ..., 13-n) being determined and compared and, at a given time, the controllable switching element of one of the limiter cells (10-1, ..., 10-n) containing the capacitor across which the highest voltage is applied is switched on and the controllable switching elements (11-1, ..., 11-n) of the other limiter cells (10-1, ..., 10-n) is or are switched off.

2. Apparatus according to Claim 1,
**characterized in that** in the operation of the apparatus (10) for limiting voltage, at a given time the controllable switching elements (11-1, ..., 11-n) of a first subset of the at least two limiter cells (10-1, ..., 10-n) is switched on and the controllable switching elements (11-1, ..., 11-n) of a second subset of the at least two limiter cells (10-1, ..., 10-n) is switched off.

3. Apparatus according to one of the preceding claims,
**characterized in that** the arrangement comprises a series circuit of the controllable switching element (11-1, ..., 11-n) and the discharge resistor (12-1, ..., 12-n) and is connected in parallel with the series circuit of the capacitors (13-1, ..., 13-n).

4. Apparatus according to Claim 3,
**characterized in that** the controllable switching element (11-1, ..., 11-n) is an IGBT.

5. Apparatus according to Claim 3,
**characterized in that** the series circuit additionally comprises an inductor (14-1, ..., 14-n).

6. Apparatus according to Claim 5,
**characterized in that** the controllable switching element (11-1, ..., 11-n) is a thyristor.

7. Apparatus according to Claim 5 or 6,
**characterized in that** the controllable switching element (11-1, ..., 11-n) is a GTO or the thyristor is provided with a quenching circuit.

8. Apparatus according to one of Claims 5 to 7,
**characterized in that** the size of the inductor (14-1, ..., 14-n) is chosen depending on the size of the capacitor (13-1, ..., 13-n) and/or of the discharge resistor (12-1, ..., 12-n), in such a way that an RLC resonant circuit is formed.

9. Apparatus according to one of Claims 5 to 8,
**characterized in that** the number of the limiter cells (10-1, ..., 10-n) is greater than 2.

10. Apparatus according to one of Claims 1-4,
**characterized in that** IGBTs with a voltage class of up to 1200 V are used as controllable switching elements.

## Revendications

1. Système de limitation de la tension pour un réseau (1) de tension continue, le système (10) comprenant au moins deux cellules (10-1, ..., 10-n) de limiteur montées en série entre un premier plan (2) de potentiel d'alimentation et un deuxième plan (3) de potentiel d'alimentation, dont chacune comprend un agencement composé d'un élément (11-1, ..., 11-n) de coupure pouvant être commandé, d'une résistance (12-1, ..., 12-n) de décharge) et d'un condensateur (13-1, ..., 13-n), dans lequel la tension (U_{ges}), s'appliquant entre le premier plan (2) de potentiel d'alimentation et le deuxième plan (3) de potentiel d'alimentation, chute aux bornes des cellules (10-1, ..., 10-n) de limiteur montées en série, dans lequel, en fonctionnement du système, en fonction de la tension (U1, U2, U3) chutant aux bornes du condensateur (13-1, ..., 13-n) d'une cellule (10-1, ..., 10-n) de limiteur respective, son élément (11-1, ..., 11-n) de coupure pouvant être commandé est monté passant ou bloquant,
**caractérisé en ce que** le système comprend une unité de commande pour la commande des éléments (11-1, ..., 11-n) de coupure respectifs des cellules (10-1, ..., 10-n) de limiteur, qui est conformée de manière à ce que, pour une surtension se produisant entre les lignes du premier et du deuxième plans (2, 3) de tension d'alimentation, les éléments (11-1, ..., 11-n) pouvant être commandés fonctionnent de manière pulsée avec un décalage dans le temps, les tensions des condensateurs (13-1, ..., 13-n) étant déterminées et comparées et, à un instant donné, l'élément de coupure pouvant être commandé de l'une des cellules (10-1, ..., 10-n) de limiteur est monté passant, la tension précisément la plus haute s'appliquant aux bornes de son condensateur et les éléments (11-1, ..., 11-n) de coupure pouvant être commandés des autres cellules (10-1, ..., 10-n) de limiteur étant montés bloquants.

2. Système suivant la revendication 1,
**caractérisé en ce que**, lorsque le système (10) de limitation de la tension est en fonctionnement, à un instant donné, les éléments (11-1, ..., 11-n) de coupure pouvant être commandés d'un premier sous-nombre des au moins deux cellules (10-1, ..., 10-n) de limiteur sont montés passants et les éléments (11-1, ..., 11-n) de coupure pouvant être commandés d'un deuxième sous-nombre des au moins deux cellules (10-1, ..., 10-n) de limiteur sont montés bloquants.

3. Système suivant l'une des revendications précédentes,
**caractérisé en ce que** l'agencement comprend un circuit série composé de l'élément (11-1, .., 11-n) de coupure pouvant être commandé et de la résistance (12-1, ..., 12n) de décharge et le condensateur (13-1, ..., 13-n) est monté en parallèle au circuit série.

4. Système suivant la revendication 3,
**caractérisé en ce que** l'élément (11-1, ..., 11-n) de coupure pouvant être commandé est un IGBT.

5. Système suivant la revendication 3,
**caractérisé en ce que** le circuit série comprend, en outre, une inductance (14-1, ..., 14-n).

6. Système suivant la revendication 5,
**caractérisé en ce que** l'élément (11-1, ..., 11-n) de coupure pouvant être commandé est un thyristor.

7. Système suivant la revendication 5 ou 6,
**caractérisé en ce que** l'élément (11-1, ..., 1-n) de coupure pouvant être commandé est un GTO ou le thyristor est pourvu d'un circuit éliminateur d'étincelle.

8. Système suivant l'une des revendications 5 à 7,
**caractérisé en ce que** le niveau de l'inductance (14-1, ..., 14-n) est choisi en fonction de la dimension du condensateur (13-1, ..., 13-n) et/ou de la résistance (12-1, ..., 12-n) de décharge, de manière à constituer un circuit oscillant RLC.

9. Système suivant l'une des revendications 5 à 8,
**caractérisé en ce que** le nombre des cellules (10-1, ..., 10-n) de limiteur est plus grand que 2.

10. Système suivant l'une des revendications 1 à 4,
**caractérisé en ce qu'**il est utilisé, comme élément de coupure pouvant être commandé, des IGBT d'une classe de tension allant jusqu'à 1200 V.
